# EUROPEAN PATENT SPECIFICATION

(11) **EP 3 144 609 B1**
(45) Date of publication and mention of the grant of the patent: **25.04.2018**
(21) Application number: 16189294.8
(22) Date of filing: 16.09.2016
(51) Int. Cl.: F25D 11/02, F25B 49/02

(54) **CONTROL METHOD FOR REFRIGERATOR**
STEUERUNGSVERFAHREN FÜR KÜHLSCHRANK
PROCÉDÉ DE COMMANDE POUR RÉFRIGÉRATEUR

(30) Priority: 17.09.2015 KR 20150131915
(43) Date of publication of application: 22.03.2017
(73) Proprietor: LG ELECTRONICS INC., Yeongdeungpo-gu Seoul 07336 (KR)
(72) Inventor: KIM, Namhun, 08592 Seoul (KR); AHN, Buhwan, 08592 Seoul (KR)
(74) Representative: Morrall, Jonathan Ian McLachlan

(56) References cited:
- EP-A2- 2 685 188

## Description

### BACKGROUND

### 1. Field

A control method for a refrigerator is disclosed herein.

### 2. Background

Generally, a refrigerator is a home appliance which stores food at a low temperature in a storage space formed therein to be opened and closed by a door. To this end, the refrigerator is formed to cool an inside of the storage space using cooling air generated through heat exchange with a refrigerant circulated in a refrigeration cycle, and thus to keep the stored food in an optimum state.

An internal space of the refrigerator is partitioned into a refrigerator compartment and a freezer compartment, and the refrigerator compartment and the freezer compartment are cooled by supplying of cooling air generated from an evaporator forming a refrigeration cycle.

The refrigeration cycle for cooling the refrigerator compartment and the freezer compartment may include a compressor, a condenser and an evaporator. Here, one or a plurality of evaporators and expanders may be provided. At this point, when the plurality of expanders and evaporators are provided, a passage through which a refrigerant flows is branched, the refrigerant may be selectively supplied to each of the evaporators by a valve, and thus the space in the refrigerator may be cooled by the evaporators.

In Korean Patent No.10-1504234, there is disclosed a refrigerator which has each of refrigeration cycles including a freezing compressor and a refrigerating compressor having refrigeration capacities different from each other in consideration of a fact that target temperatures of a refrigerator compartment and a freezer compartment in the refrigerator are largely different from each other, and is able to independently cool the refrigerator compartment and the freezer. Another known refrigerator with multi refrigeration cycles is disclosed in EP-2685188, disclosing the preamble of claim 1.

### SUMMARY

The present disclosure is directed to providing a control method for a refrigerator, which controls an operation of each of a refrigerator compartment compressor and a freezer compartment compressor and improves a power consumption.

According to an aspect of the present disclosure, there is provided a control method for a refrigerator, characterized by including an refrigerator compartment driving operation [S110] of cooling a refrigerator compartment by driving of an inverter type refrigerator compartment compressor; a freezer compartment-first-driving operation [S130] of starting driving of an inverter type freezer compartment compressor when the refrigerator compartment reaches a set temperature (D1) before an operation of the refrigerator compartment is finished; a freezer compartment driving operation [S160] of maintaining the driving of the freezer compartment compressor after the refrigerator compartment driving operation is finished and cooling the freezer compartment to a target temperature (D3); and a frequency-varying operation [S180] of cooling the refrigerator compartment to a target temperature (D2) by driving again the refrigerator compartment compressor after the freezer compartment driving operation is finished, the refrigerator compartment compressor being operated in a state in which a frequency thereof is varied to reduce a capacity when the driving thereof starts.

The refrigerator compartment driving operation may be finished when a temperature of the refrigerator compartment reaches the target temperature (D2) or when the freezer compartment-first-driving operation is performed for a set time (T1).

The set time (T1) may be a time while driving of the freezer compartment compressor starts and is stabilized.

The set time (T1) may be a time while a temperature of cooling air generated from a freezer compartment evaporator reaches a set temperature.

In the freezer compartment driving operation, the freezer compartment compressor may maintain the frequency thereof when the freezer compartment-first-driving operation is finished.

In the freezer compartment driving operation, the freezer compartment compressor may be driven with 100% of the capacity.

In the frequency-varying operation, the frequency of the freezer compartment compressor may be determined by a time of the freezer compartment-first-driving operation.

In the frequency-varying operation, the refrigerator compartment compressor may be driven with 80 to 90% of the capacity.

The freezer compartment-first-driving operation may be finished when the driving of the freezer compartment compressor is stabilized.

The freezer compartment-first-driving operation may be finished when a temperature of cooling air generated from a freezer compartment evaporator reaches a set temperature.

The set temperature (D1) may be higher than the target temperature (D2).

In the frequency-varying operation, the refrigerator compartment may be further cooled by a driving time of the freezer compartment which is reduced by the freezer compartment-first-driving operation.

### BRIEF DESCRIPTION OF THE DRAWINGS

Embodiments and examples will be described in detail with reference to the following drawings in which like reference numerals refer to like elements, and wherein:
FIG. 1 is an overview schematically illustrating a structure of a refrigerator according to an illustrative example;
FIG. 2 is a block diagram illustrating a flow of a control signal in the refrigerator;
FIG. 3 is a circuit diagram illustrating a flow of a refrigerant in the refrigerator;
FIG. 4 is a flowchart sequentially illustrating an operation of the refrigerator;
FIG. 5 is a graph illustrating a change in a power consumption in a freezer compartment-first-driving operation of the refrigerator; and
FIG. 6 is a graph illustrating the change in the power consumption in a frequency-varying operation of a refrigerator compartment after the freezer compartment-first-driving operation of the refrigerator.

### DETAILED DESCRIPTION

Reference will now to be made in detail the embodiments of the present disclosure, examples of which are illustrated in the accompanying drawings. The claimed subject matter may, however, be embodied in many different forms and should not be construed as being limited to the examples and embodiments set forth herein; rather, alternative embodiments falling within the scope of the present disclosure can easily be derived through adding, altering, and removing, and will fully convey the concept of the disclosure to those skilled in the art.

For convenience of explanation and understanding, for example, a bottom freezer type refrigerator in which a freezer compartment is provided at a lower side and a refrigerator compartment is provided at an upper side will be described as a refrigerator according to an example. However, the present disclosure may be applied to all types of refrigerators in which separated spaces may be cooled by a plurality of evaporators.

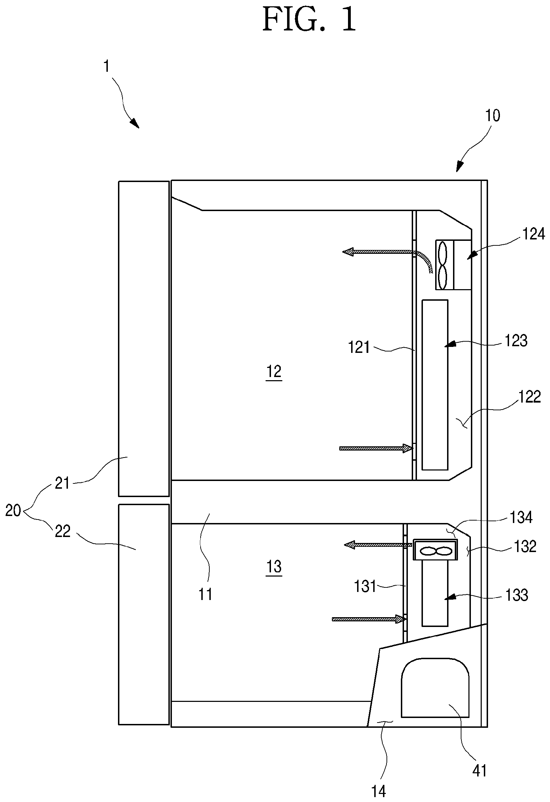

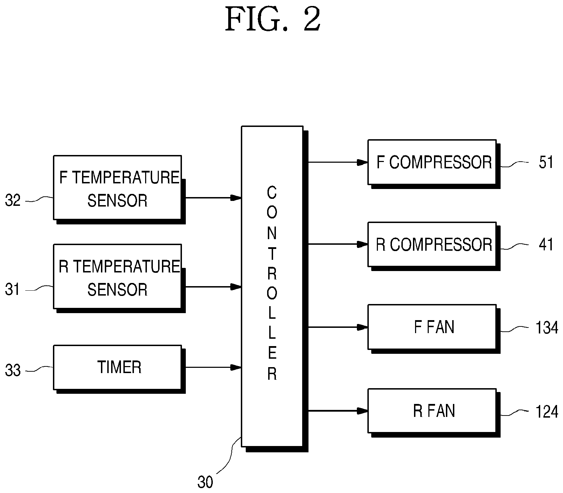

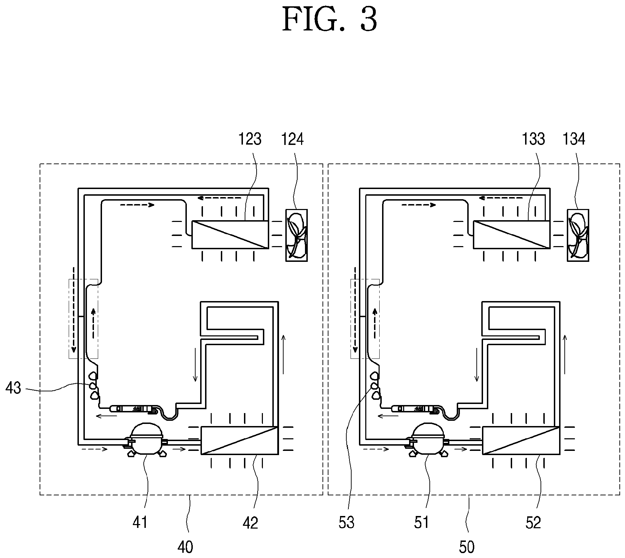

FIG. 1 is an overview schematically illustrating a structure of a refrigerator according to an illustrative example. And FIG. 2 is a block diagram illustrating a flow of a control signal in the refrigerator. And FIG. 3 is a circuit diagram illustrating a flow of a refrigerant in the refrigerator.

As illustrated in the drawings, an entire exterior of a refrigerator 1 according to an illustrative example is formed by a refrigerator body 10 which forms a storage space and a door 20 which is installed at the refrigerator body 10 to open and close the storage space.

The storage space is partitioned into an upper portion and a lower portion by a barrier 11. A refrigerator compartment 12 is formed at the upper portion, and a freezer compartment 13 is formed at the lower portion. And the door 20 includes a refrigerator compartment door 21 for opening and closing the refrigerator compartment 12 and a freezer compartment door 22 for opening and closing the freezer compartment 13, and is formed to independently open and close the refrigerator compartment 12 and the freezer compartment 13. At this point, the refrigerator compartment door 21 and the freezer compartment door 22 may be installed at the refrigerator body 10 to be rotatable or to be slidably inserted or withdrawn and may thus open and close the refrigerator compartment 12 and the freezer compartment 13, respectively.

Meanwhile, a machinery chamber 14 is formed at a lower portion of the refrigerator body 10. The machinery chamber 14 is a space partitioned from the storage space by an insulator, may be disposed on a bottom surface of the refrigerator body 10, and may be formed to be opened backward and to be shielded by a machinery chamber cover. At this point, a plurality of vent holes may be formed at the machinery chamber cover so that external air flows to an inside and an outside of the machinery chamber 14.

Compressors 41 and 51, condensers 42 and 52 and cooling fans (not shown) for promoting heat exchange of the condensers 42 and 52 may be provided inside the machinery chamber 14. And the refrigerator compartment compressor 41 and the refrigerator compartment condenser 42 forming a refrigerator compartment refrigeration cycle 40 for cooling the refrigerator compartment 12 and the freezer compartment compressor 51 and the freezer compartment condenser 52 forming a freezer compartment refrigeration cycle 50 for cooling the freezer compartment 13 may be provided in the machinery chamber 14.

A refrigerator compartment capillary tube 43 and a freezer compartment capillary tube 53 which are respectively connected to a refrigerator compartment evaporator 123 and a freezer compartment evaporator 133 may be provided at inlet sides of the refrigerator compartment evaporator 123 and the freezer compartment evaporator 133, respectively. The refrigerator compartment capillary tube 43 and the freezer compartment capillary tube 53 may be provided inside the machinery chamber 14.

Of course, the refrigerator compartment capillary tube 43 and the freezer compartment capillary tube 53 may be provided at other locations rather than the machinery chamber 14, and the embodiment is not limited to the locations thereof.

Meanwhile, an evaporator which generates cooling air for cooling an inside of the refrigerator 1 is provided at a rear of each of the refrigerator compartment 12 and the freezer compartment 13. The evaporator includes the refrigerator compartment evaporator 123 and the freezer compartment evaporator 133 which are provided at the rear of the refrigerator compartment 12 and the freezer compartment 13, respectively, to independently cool the refrigerator compartment 12 and the freezer compartment 13.

Specifically, a refrigerator compartment grille pan 121 is provided at a rear surface of the refrigerator compartment 12. The refrigerator compartment grille pan 121 is formed to partition a space of the refrigerator compartment 12 in which food is stored and a refrigerator compartment heat exchange chamber 122 in which the refrigerator compartment evaporator 123 for generating the cooling air is accommodated. And an outlet port through which the cooling air generated from the refrigerator compartment evaporator 123 is supplied to the refrigerator compartment 12 and an inlet port through which internal air of the refrigerator compartment 12 is suctioned to exchange heat with the refrigerator compartment evaporator 123 may be formed at the refrigerator compartment grille pan 121.

And the refrigerator compartment evaporator 123 is provided inside the refrigerator compartment heat exchange chamber 122, and the cooling air for cooling an inside of the refrigerator compartment 12 is generated by the refrigerator compartment evaporator 123. And a refrigerator compartment fan 124 is provided at the refrigerator compartment heat exchange chamber 122. The refrigerator compartment fan 124 serves to forcibly blow the cooling air generated through the refrigerator compartment evaporator 123 to the refrigerator compartment 12 to cool the refrigerator compartment 12 and also enables the air in the refrigerator compartment 12 to be suctioned to the refrigerator compartment heat exchange chamber 122 to exchange heat with the refrigerator compartment evaporator 123.

The refrigerator compartment fan 124 may use all of an axial flow fan in which the air is discharged axially and a centrifugal fan in which the air is discharged in a circumferential direction thereof according to air suctioning and discharging directions and may further include a separate air guide to smoothly supply the air to the refrigerator compartment 12. And the refrigerator compartment fan 124 may be fixed inside the refrigerator compartment heat exchange chamber 122 by a separate frame.

Meanwhile, a refrigerator compartment temperature sensor 31 for measuring an internal temperature of the refrigerator compartment 12 may be provided inside the refrigerator compartment 12, and a controller 30 for controlling an operation of the refrigerator 1 may control the compressors 41 and 51, the refrigerator compartment fan 124 and a freezer compartment fan 134 according to the temperature measured by the refrigerator compartment temperature sensor 31.

And a freezer compartment grille pan 131 is provided at a rear surface of the freezer compartment 13. The freezer compartment grille pan 131 is formed to partition a space of the freezer compartment 13 in which the food is stored and a freezer compartment heat exchange chamber 132 in which the freezer compartment evaporator 133 for generating the cooling air is accommodated. And an outlet port through which the cooling air generated from the freezer compartment evaporator 133 is supplied to the freezer compartment 13 and an inlet port through which internal air of the freezer compartment 13 is suctioned to exchange heat with the freezer compartment evaporator 133 may be formed at the freezer compartment grille pan 131.

And the freezer compartment evaporator 133 is provided inside the freezer compartment heat exchange chamber 132, and the cooling air for cooling an inside of the freezer compartment 13 is generated by the freezer compartment evaporator 133. And the freezer compartment fan 134 is provided at the freezer compartment heat exchange chamber 132. The freezer compartment fan 134 serves to forcibly blow the cooling air generated through the freezer compartment evaporator 133 to the freezer compartment 13 to cool the freezer compartment 13 and also enables the air in the freezer compartment 13 to be suctioned to the freezer compartment heat exchange chamber 132 to exchange heat with the freezer compartment evaporator 133.

The freezer compartment fan 134 may also use all of the axial flow fan and the centrifugal fan, and a separate air guide or a frame for installing the freezer compartment fan 134 may be provided at the freezer compartment heat exchange chamber 132. And a freezer compartment temperature sensor 32 for measuring an internal temperature of the freezer compartment 13 may be provided inside the freezer compartment 13.

And a timer 33 for measuring a driving time of each element including the refrigerator compartment compressor 41, the freezer compartment compressor 51, the refrigerator compartment fan 124 and the freezer compartment fan 134 may be provided at the controller 30. That is, an operating time of the refrigerator compartment 12 or the freezer compartment 13 may be measured by the timer 33, and measured time information may be transmitted to the controller 30.

Meanwhile, the refrigerator 1 according to the illustrative example is formed to have the refrigerator compartment refrigeration cycle 40 and the freezer compartment refrigeration cycle 50 which are separated from each other. The refrigerator compartment refrigeration cycle 40 and the freezer compartment refrigeration cycle 50 may be completely separated from each other so that operations thereof are independently controlled by the controller 30 and each of the refrigerator compartment 12 and the freezer compartment 13 may maintain a preset temperature or a preset temperature range.

Specifically, the refrigerator compartment refrigeration cycle 40 is formed so that the refrigerator compartment compressor 41, the refrigerator compartment condenser 42, the refrigerator compartment capillary tube 43 and the refrigerator compartment evaporator 123 are connected by a refrigerant pipe. And the refrigerator compartment compressor 41 is an inverter type compressor and is formed to vary a frequency according to a load in the refrigerator compartment 12 and thus to vary a compression capacity.

The cooling air is generated from the refrigerator compartment evaporator 123 while a refrigerant is circulated by driving of the refrigerator compartment compressor 41. The cooling air may be supplied toward the inside of the refrigerator 1 by the refrigerator compartment fan 124 and may cool the inside of the refrigerator compartment 12.

At this point, driving of the refrigerator compartment compressor 41 and the refrigerator compartment fan 124 may be controlled by the controller 30 according to the internal temperature of the refrigerator compartment 12 detected by the refrigerator compartment temperature sensor 31. Therefore, the refrigerator compartment 12 may be cooled to maintain the preset temperature or the preset temperature range.

And the freezer compartment refrigeration cycle 50 is formed so that the freezer compartment compressor 51, the freezer compartment condenser 52, the freezer compartment capillary tube 53 and the freezer compartment evaporator 133 are connected by the refrigerant pipe. And the freezer compartment compressor 51 is an inverter type compressor and is formed to vary a frequency according to a load in the freezer compartment 13 and thus to vary a compression capacity.

The cooling air is generated from the freezer compartment evaporator 133 while the refrigerant is circulated by driving of the freezer compartment compressor 51. The cooling air may be supplied toward the inside of the refrigerator 1 by the freezer compartment fan 134 and may cool the inside of the freezer compartment 13.

At this point, driving of the freezer compartment compressor 51 and the freezer compartment fan 134 may be controlled by the controller 30 according to the internal temperature of the freezer compartment 13 detected by the freezer compartment temperature sensor 32. Therefore, the freezer compartment 13 may be cooled to maintain the preset temperature or the preset temperature range.

As described above, the refrigerator compartment refrigeration cycle 40 and the freezer compartment refrigeration cycle 50 may be independently driven by the controller 30 and may be configured to be alternately continuously operated, thereby efficiently cooling the inside of the refrigerator 1.

That is, when the temperature of the refrigerator compartment 12 is not satisfied, cooling of the refrigerator compartment 12 is performed by driving the refrigerator compartment compressor 41. When the temperature of the refrigerator compartment 12 is satisfied, the freezer compartment 13 is cooled by driving of the freezer compartment compressor 51 until the internal temperature of the freezer compartment 13 reaches the preset temperature or less.

Hereinafter, an operation of the refrigerator 1 according to the illustrative example having the above-described configuration will be described in detail.

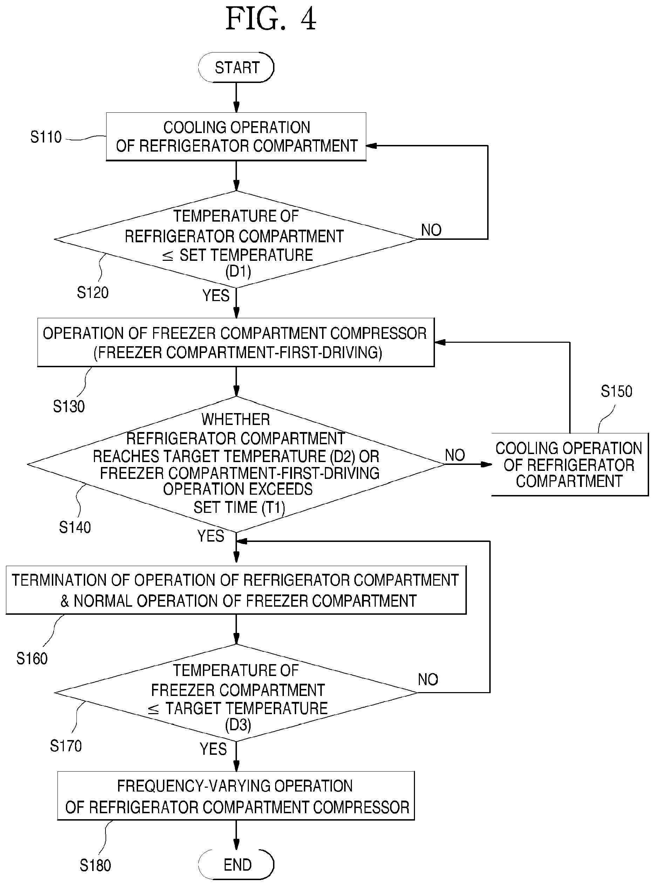

FIG. 4 is a flowchart sequentially illustrating the operation of the refrigerator.

As illustrated in the drawing, in the refrigerator 1 according to the invention when the refrigerator compartment 12 and the freezer compartment 13 are cooled, the cooling of the refrigerator compartment 12 which is able to rapidly reach a target temperature due to the relatively higher target temperature is first performed. Of course, for convenience of explanation and understanding, although it has been described that an operation of the refrigerator compartment 12 is performed first, it would be obvious that the present disclosure may be applied to the operation of the refrigerator compartment 12 after the operation of the freezer compartment 13.

For the cooling operation of the refrigerator compartment 12, the internal temperature of the refrigerator compartment 12 is measured by the refrigerator compartment temperature sensor 31, and the cooling operation of the refrigerator compartment 12 starts in a state in which the temperature of the refrigerator compartment 12 is unsatisfied.

To cool the refrigerator compartment 12, the driving of the refrigerator compartment compressor 41 and the refrigerator compartment fan 124 may start, and the cooling air generated from the refrigerator compartment evaporator 123 may be supplied to the refrigerator compartment 12 by the refrigerator compartment fan 124 [S110].

Meanwhile, the controller 30 determines whether the temperature of the refrigerator compartment 12 measured by the refrigerator compartment temperature sensor 31 reaches a set temperature D1 for the operation of the freezer compartment 13. The set temperature D1 is a temperature before the cooling operation of the refrigerator compartment 12 is finished, i.e., a temperature which is higher than a target temperature D2 and at which the cooling operation of the freezer compartment 13 is performed before the cooling operation of the refrigerator compartment 12 is finished.

For example, when the target temperature D2 for cooling the refrigerator compartment 12 is 5°C, the set temperature D1 may be set to 5.5°C which is slightly higher than the target temperature D2. Therefore, before the refrigerator compartment 12 reaches the target temperature D2, the temperature of the refrigerator compartment 12 may reach the set temperature D1, and the controller 30 may determine such a state. And the cooling operation of the refrigerator compartment 12 is continued until the temperature of the refrigerator compartment 12 reaches the set temperature D1, and the refrigerator compartment temperature sensor 31 continuously detects and transmits the temperature to the controller 30 [S120].

When the temperature of the refrigerator compartment 12 reaches the set temperature D1, the controller 30 performs a freezer compartment-first-driving operation in which the freezer compartment compressor 51 is operated. At this point, the refrigerator compartment compressor 41 is also still driven, and thus the refrigerator compartment compressor 41 and the freezer compartment compressor 51 may be driven together.

The freezer compartment compressor 51 which is the inverter type compressor has a characteristic in which a rotating speed thereof is slowly increased until the driving thereof is stabilized at the early stage. That is, it takes a predetermined time to supply the cooling for substantially cooling the freezer compartment 13.

Therefore, since the freezer compartment-first-driving operation in which the freezer compartment compressor 51 is driven is performed at a time point at which the cooling operation of the refrigerator compartment 12 is being finished, the freezer compartment 13 may be effectively cooled when a solo operation of the freezer compartment 13 starts [S130].

Meanwhile, when the freezer compartment-first-driving operation starts by the driving of the freezer compartment compressor 51, the timer 33 counts a time of the freezer compartment-first-driving operation. And the controller 30 compares the temperature of the refrigerator compartment 12 measured by the refrigerator compartment temperature sensor 31 with the time of the freezer compartment-first-driving operation integrated by the timer 33.

Specifically, when the temperature of the refrigerator compartment 12 reaches the target temperature D2, the cooling operation of the refrigerator compartment 12 should be terminated to prevent supercooling of the refrigerator compartment 12, and the driving of the refrigerator compartment compressor 41 is stopped.

When the refrigerator compartment door 21 is opened several times or high-temperature food is put in the refrigerator compartment 12 and an additional thermal load is generated while the freezer compartment-first-driving operation is being performed, an operation time of the refrigerator compartment 12 is increased. When the operation time of the refrigerator compartment 12 is continuously increased, a time when the refrigerator compartment compressor 41 and the freezer compartment compressor 51 are operated at the same time is also increased, and a power consumption is increased.

Therefore, when the operation time of the freezer compartment-first-driving operation exceeds a set time T1 although the temperature of the refrigerator compartment 12 does not reach the target temperature D2, the driving of the refrigerator compartment compressor 41 is stopped, and the cooling operation of the refrigerator compartment 12 is terminated.

At this point, the operation time of the freezer compartment-first-driving operation may be set to a time which is taken until the cooling air having a set temperature is discharged from the freezer compartment evaporator 133 after the freezer compartment compressor 51 is driven and the driving thereof is stabilized [S140].

Meanwhile, the controller 30 enables the freezer compartment-first-driving operation to be continued until the temperature of the refrigerator compartment 12 reaches the target temperature D2 or the freezer compartment-first-driving operation is performed for the set time T1 or more, and the cooling operation of the refrigerator compartment 12 is also continuously performed [S150].

When the controller 30 determines that the temperature of the refrigerator compartment 12 reaches the target temperature D2 or the freezer compartment-first-driving operation is performed for the set time T1 or more, the driving of the refrigerator compartment compressor 41 is stopped, and the cooling operation of the refrigerator compartment 12 is terminated.

And the freezer compartment compressor 51 may be driven while the rotating speed thereof is maintained in a stabilized state, and thus the freezer compartment evaporator 133 may supply the cooling air for cooling the freezer compartment 13 and may continuously cool the freezer compartment 13 [S160].

Meanwhile, when it is determined by the freezer compartment temperature sensor 32 that the temperature of the freezer compartment 13 reaches a target temperature D3 which satisfies a temperature for cooling the freezer compartment 13, the driving of the freezer compartment compressor 51 is terminated [S170].

And as the driving of the freezer compartment compressor 51 is terminated, the driving of the refrigerator compartment compressor 41 starts. At this point, the refrigerator compartment compressor 41 is not operated with 100% of a designed capacity, but may output 80 to 90% of the capacity. Therefore, the refrigerator compartment compressor 41 may perform a frequency-varying operation which reduces the rotating speed.

The cooling operation of the refrigerator compartment 12 performed by the frequency variable operation may be performed by a time of the cooling operation of the freezer compartment 13 which is shortened by the freezer compartment-first-driving operation, and a frequency for driving the refrigerator compartment compressor 41 may be determined by the time of the freezer compartment-first-driving operation [S180].

Hereinafter, an operation state of the refrigerator 1 according to the invention will be described in detail by comparing with an operation state of a general refrigerator.

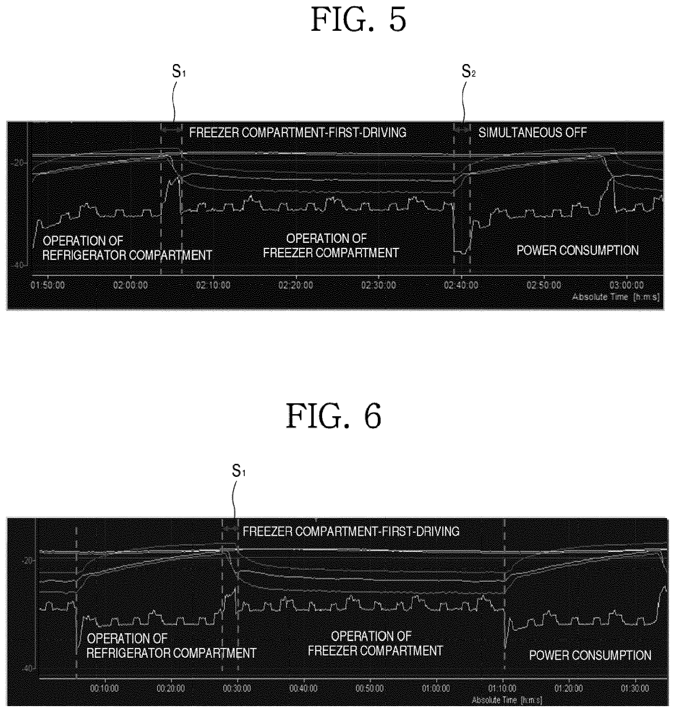

FIG. 5 is a graph illustrating a change in the power consumption in the freezer compartment-first-driving operation of the refrigerator. And FIG. 6 is a graph illustrating the change in the power consumption in the frequency-varying operation of the refrigerator compartment after the freezer compartment-first-driving operation of the refrigerator.

As illustrated in the drawings, when the temperature of the refrigerator compartment 12 reaches the set temperature D1 in a state in which the cooling operation of the refrigerator compartment 12 is performed by the driving of the refrigerator compartment compressor 41, the freezer compartment-first-driving operation in which the driving of the freezer compartment compressor 51 starts is performed.

During a freezer compartment-first-driving operation section S1, the refrigerator compartment compressor 41 is driven together, and when the temperature of the refrigerator compartment 12 reaches the target temperature D2 or the freezer compartment-first-driving operation is continued for the set time, the cooling operation of the refrigerator compartment 12 is terminated, and the cooling operation of the freezer compartment 13 is performed.

As illustrated in FIG. 5, an entire operation time of the cooling operation of the freezer compartment 13 may be shortened by the time of the freezer compartment-first-driving operation due to the freezer compartment-first-driving operation which is previously performed, and thus a simultaneous-off section S2 may be ensured before performing of the cooling operation of the refrigerator compartment 12 after a termination of the cooling operation of the freezer compartment 13. The simultaneous-off section S2 is a section in which both of the refrigerator compartment compressor 41 and the freezer compartment compressor 51 are stopped, and may have the same time as the time of the freezer compartment-first-driving operation.

Therefore, as illustrated in FIG. 6, the cooling operation of the refrigerator compartment 12 which is performed after the cooling operation of the freezer compartment 13 may be further operated by a time of the simultaneous-off section S2, that is, a time of the freezer compartment-first-driving operation section S1. By securing the additional operation time, the controller 30 may vary a RPM of the refrigerator compartment compressor 41. That is, by controlling the frequency of the refrigerator compartment compressor 41 to enhance power consumption efficiency, the operation may be further performed for a longer time.

According to the control method for a refrigerator according to the invention, the following effects can be expected.

In a state in which the freezer compartment compressor is driven at a back end of the cooling operation of the refrigerator compartment and the driving of the freezer compartment compressor is stabilized, the cooling operation of the freezer compartment is performed, and thus a time when the freezer compartment reaches a target temperature can be shortened.

And when the cooling operation of the refrigerator compartment is performed after that, a time of the cooling operation of the refrigerator compartment can be increased by shortening the time when the freezer compartment reaches the target temperature. Accordingly, the frequency-varying operation in which the refrigerator compartment compressor is operated in a state in which a capacity thereof is reduced to correspond to the increased operation time can be performed. Therefore, the refrigerator compartment compressor can be efficiently operated, and the power consumption can be reduced.

Particularly, due to the characteristic of the inverter type compressor, the freezer compartment-first-driving operation is performed for a time before the driving thereof is stabilized, and thus the power consumption can be prevented from being sharply increased even when the refrigerator compartment compressor and the freezer compartment compressor are simultaneously performed, and an improvement of the entire power consumption can be expected, allowing for the power consumption saved by the frequency-varying operation.

Even though all the elements of the embodiments are coupled into one or operated in the combined state, the present disclosure is not limited to such an embodiment. That is, all the elements may be selectively combined with each other without departing from the scope of the appended claims. Furthermore, when it is described that one comprises (or includes or has) some elements, it should be understood that it may comprise (or include or have) only those elements, or it may comprise (or include or have) other elements as well as those elements if there is no specific limitation. Unless otherwise specifically defined herein, all terms comprising technical or scientific terms are to be given meanings understood by those skilled in the art. Like terms defined in dictionaries, generally used terms needs to be construed as meaning used in technical contexts and are not construed as ideal or excessively formal meanings unless otherwise clearly defined herein.

Although embodiments have been described with reference to a number of illustrative embodiments thereof, it will be understood by those skilled in the art that various changes in form and details may be made therein without departing from the scope of the appended claims. Therefore, the preferred embodiments should be considered in a descriptive sense only and not for purposes of limitation, and also the technical scope of the appended claims is not limited to the embodiments. Furthermore, the present disclosure is defined not by the detailed description but by the appended claims, and all differences within the scope will be construed as being comprised in the present disclosure.

## Claims

1. A control method for a refrigerator, comprising :
a refrigerator compartment driving operation (S110) comprising cooling a refrigerator compartment by driving of an inverter type refrigerator compartment compressor; **characterized by** first driving operation of a freezer compartment (S130) comprising starting driving of an inverter type freezer compartment compressor when the refrigerator compartment reaches a first set temperature (D1) and before the refrigerator compartment driving operation (S110) is finished;
a second driving operation of the freezer compartment (S160) comprising maintaining the driving of the freezer compartment compressor after the refrigerator compartment driving operation (S110) is finished and cooling the freezer compartment to a first target temperature (D3); and
a frequency-varying operation (S180) comprising cooling the refrigerator compartment to a second target temperature (D2) by driving the refrigerator compartment compressor again after the second driving operation of the freezer compartment (S160) is finished, wherein the refrigerator compartment compressor is operated at less than 100% of its capacity by varying an operating frequency of the refrigerator compartment compressor when the driving thereof starts.

2. The control method according to claim 1, wherein the refrigerator compartment driving operation (S110) is finished when a temperature of the refrigerator compartment reaches the second target temperature (D2).

3. The control method according to claim 1, wherein the refrigerator compartment driving operation (S110) is finished when the first driving operation of the freezer compartment (S130) is performed for a set time (T1).

4. The control method according to claim 3, wherein the set time (T1) is a time taken for driving of the freezer compartment compressor to become stabilized after starting.

5. The control method according to claim 3 or 4, wherein the set time (T1) is a time taken for a temperature of cooling air generated by a freezer compartment evaporator to reach a set temperature.

6. The control method according to any preceding claim, wherein, in the second driving operation of the freezer compartment (S160), the freezer compartment compressor maintains its operating frequency when the first driving operation of the freezer compartment (S130) is finished.

7. The control method according to any preceding claim, wherein, in the second driving operation of the freezer compartment (S160), the freezer compartment compressor is driven at 100% of its capacity.

8. The control method according to any preceding claim, wherein, in the frequency-varying operation (S180), the frequency of the refrigerator compartment compressor is determined by a time taken for the first driving operation of the freezer compartment (S130).

9. The control method according to any preceding claim, wherein, in the frequency-varying operation (S180), the refrigerator compartment compressor is driven at 80 to 90% of its capacity.

10. The control method according to any preceding claim, wherein the first driving operation of the freezer compartment (S130) finishes when the driving of the freezer compartment compressor becomes stabilized.

11. The control method according to any of claims 1-4 or 6-10, wherein the first driving operation of the freezer compartment (S130) finishes when a temperature of cooling air generated from a freezer compartment evaporator reaches a second set temperature.

12. The control method according to claim 5, wherein the first driving operation of the freezer compartment (S130) finishes when a temperature of cooling air generated from the freezer compartment evaporator reaches a second set temperature.

13. The control method according to any preceding claim, wherein the first set temperature (D1) is higher than the second target temperature (D2).

## Patentansprüche

1. Steuerungsverfahren für einen Kühlschrank, Folgendes umfassend:
eine Kühlschrankbereich-Betriebsoperation (S110), die Kühlen eines Kühlschrankbereichs durch Betreiben eines Kühlschrankbereich-Kompressors vom Invertertyp umfasst;
**dadurch gekennzeichnet, dass**
eine erste Betriebsoperation eines Gefrierschrankbereichs (S130) Starten eines Betreibens eines Gefrierschrankbereich-Kompressors vom Invertertyp umfasst, wenn der Kühlschrankbereich eine erste Solltemperatur (D1) erreicht und bevor die Kühlschrankbereich-Betriebsoperation (S110) beendet ist;
eine zweite Betriebsoperation des Gefrierschrankbereichs (S160) Aufrechterhalten des Betreibens des Gefrierschrankbereich-Kompressors, nachdem die Kühlschrankbereich-Betriebsoperation (S110) beendet ist, und des Kühlens des Gefrierschrankbereichs auf eine erste Zieltemperatur (D3) umfasst; und
eine frequenzvariierende Operation (S180) Kühlen des Kühlschrankbereichs auf eine zweite Zieltemperatur (D2) durch erneutes Betreiben des Kühlschrankbereich-Kompressors umfasst, nachdem die zweite Betriebsoperation des Gefrierschrankbereichs (S160) beendet ist, wobei der Kühlschrankbereich-Kompressor bei weniger als 100 % seiner Kapazität durch Variieren einer Betriebsfrequenz des Kühlschrankbereich-Kompressors betrieben wird, wenn das Betreiben von diesem startet.

2. Steuerungsverfahren nach Anspruch 1, wobei die Kühlschrankbereich-Betriebsoperation (S110) beendet ist, wenn eine Temperatur des Kühlschrankbereichs die zweite Zieltemperatur (D2) erreicht.

3. Steuerungsverfahren nach Anspruch 1, wobei die Kühlschrankbereich-Betriebsoperation (S110) beendet ist, wenn die erste Betriebsoperation des Gefrierschrankbereichs (S130) für eine Sollzeit (T1) durchgeführt wird.

4. Steuerungsverfahren nach Anspruch 3, wobei die Sollzeit (T1) eine Zeit ist, die beim Betreiben des Gefrierschrankbereich-Kompressors gebraucht wird, um nach dem Starten stabilisiert zu werden.

5. Steuerungsverfahren nach Anspruch 3 oder 4, wobei die Sollzeit (T1) eine Zeit ist, die gebraucht wird, damit eine Temperatur von Kühlluft, die von einem Gefrierschrankbereich-Verdampfer erzeugt wird, eine Solltemperatur erreicht.

6. Steuerungsverfahren nach einem der vorhergehenden Ansprüche, wobei bei der zweiten Betriebsoperation des Gefrierschrankbereichs (S160) der Gefrierschrankbereich-Kompressor seine Betriebsfrequenz aufrechterhält, wenn die erste Betriebsoperation des Gefrierschrankbereichs (S130) beendet ist.

7. Steuerungsverfahren nach einem der vorhergehenden Ansprüche, wobei bei der zweiten Betriebsoperation des Gefrierschrankbereichs (S160) der Gefrierschrankbereich-Kompressor bei 100 % seiner Kapazität betrieben wird.

8. Steuerungsverfahren nach einem der vorhergehenden Ansprüche, wobei bei der frequenzvariierenden Operation (S180) die Frequenz des Kühlschrankbereich-Kompressors durch eine Zeit bestimmt wird, die für die erste Betriebsoperation des Gefrierschrankbereichs (S130) gebraucht wird.

9. Steuerungsverfahren nach einem der vorhergehenden Ansprüche, wobei bei der frequenzvariierenden Operation (S180) der Kühlschrankbereich-Kompressor bei 80 bis 90 % seiner Kapazität betrieben wird.

10. Steuerungsverfahren nach einem der vorhergehenden Ansprüche, wobei die erste Betriebsoperation des Gefrierschrankbereichs (S130) endet, wenn das Betreiben des Gefrierschrankbereich-Kompressors stabilisiert wird.

11. Steuerungsverfahren nach einem der Ansprüche 1 bis 4 oder 6 bis 10, wobei die erste Betriebsoperation des Gefrierschrankbereichs (S130) endet, wenn eine Temperatur von Kühlluft, die von einem Gefrierschrankbereich-Verdampfer erzeugt wird, eine zweite Solltemperatur erreicht.

12. Steuerungsverfahren nach Anspruch 5, wobei die erste Betriebsoperation des Gefrierschrankbereichs (S130) endet, wenn eine Temperatur von Kühlluft, die von dem Gefrierschrankbereich-Verdampfer erzeugt wird, eine zweite Solltemperatur erreicht.

13. Steuerungsverfahren nach einem der vorhergehenden Ansprüche, wobei die erste Solltemperatur (D1) höher ist als die zweite Zieltemperatur (D2).

## Revendications

1. Procédé de commande pour un réfrigérateur, comprenant :
une opération d'entraînement de compartiment réfrigérateur (S110) comprenant le refroidissement d'un compartiment réfrigérateur par l'entraînement d'un compresseur du compartiment réfrigérateur de type à onduleur ;
**caractérisé par**
une première opération d'entraînement d'un compartiment congélateur (S130) comprenant le démarrage de l'entraînement d'un compresseur du compartiment congélateur de type onduleur lorsque le compartiment réfrigérateur atteint une première température définie (D1) et avant que l'opération d'entraînement du compartiment réfrigérateur (S110) ne soit terminée ;
une deuxième opération d'entraînement du compartiment congélateur (S160) comprenant le maintien de l'entraînement du compresseur du compartiment congélateur après que l'opération d'entraînement du compartiment réfrigérateur (S110) soit terminée, et le refroidissement du compartiment congélateur à une première température cible (D3) ; et
une opération à variation de fréquence (S180) comprenant le refroidissement du compartiment réfrigérateur à une deuxième température cible (D2) en entraînant de nouveau le compresseur du compartiment réfrigérateur après que la deuxième opération d'entraînement du compartiment congélateur (S160) soit terminée, le compresseur du compartiment réfrigérateur étant actionné à moins de 100 % de sa capacité en faisant varier une fréquence de fonctionnement du compresseur du compartiment réfrigérateur lorsque son entraînement commence.

2. Procédé de commande selon la revendication 1, l'opération d'entraînement du compartiment réfrigérateur (S110) étant terminée lorsqu'une température du compartiment réfrigérateur atteint la deuxième température cible (D2).

3. Procédé de commande selon la revendication 1, l'opération d'entraînement du compartiment réfrigérateur (S110) étant terminée lorsque la première opération d'entraînement du compartiment congélateur (S130) est effectuée pendant une durée définie (T1).

4. Procédé de commande selon la revendication 3, la durée définie (T1) étant une durée nécessaire pour entraîner le compresseur du compartiment congélateur à devenir stabilisé après le démarrage.

5. Procédé de commande selon la revendication 3 ou 4, le durée définie (T1) étant une durée nécessaire à une température de l'air de refroidissement généré par un évaporateur du compartiment congélateur pour atteindre une température définie.

6. Procédé de commande selon l'une quelconque des revendications précédentes, dans lequel, dans la deuxième opération d'entraînement du compartiment congélateur (S160), le compresseur du compartiment congélateur maintient sa fréquence de fonctionnement lorsque la première opération d'entraînement du compartiment congélateur (S130) est terminée.

7. Procédé de commande selon l'une quelconque des revendications précédentes, dans lequel, dans la deuxième opération d'entraînement du compartiment congélateur (S160), le compresseur du compartiment congélateur est entraîné à 100 % de sa capacité.

8. Procédé de commande selon l'une quelconque des revendications précédentes, dans lequel, dans l'opération à variation de fréquence (S180), la fréquence du compresseur du compartiment réfrigérateur est déterminée par une durée nécessaire pour la première opération d'entraînement du compartiment congélateur (S130).

9. Procédé de commande selon l'une quelconque des revendications précédentes, dans lequel, dans l'opération à variation de fréquence (S180), le compresseur du compartiment réfrigérateur est entraîné de 80 à 90 % de sa capacité.

10. Procédé de commande selon l'une quelconque des revendications précédentes, la première opération d'entraînement du compartiment congélateur (S130) finissant lorsque l'entraînement du compresseur du compartiment congélateur devient stabilisé.

11. Procédé de commande selon l'une quelconque des revendications 1 à 4 ou 6 à 10, la première opération d'entraînement du compartiment congélateur (S130) finissant lorsqu'une température de l'air de refroidissement généré à partir d'un évaporateur du compartiment congélateur atteint une deuxième température définie.

12. Procédé de commande selon la revendication 5, la première opération d'entraînement du compartiment congélateur (S130) finissant lorsqu'une température de l'air de refroidissement généré par l'évaporateur du compartiment congélateur atteint une deuxième température définie.

13. Procédé de commande selon l'une quelconque des revendications précédentes, la première température définie (D1) étant supérieure à la deuxième température cible (D2).
